# EUROPÄISCHE PATENTSCHRIFT

(11) **EP 0 909 280 B1**
(45) Veröffentlichungstag und Bekanntmachung des Hinweises auf die Patenterteilung: **23.08.2000**
(21) Anmeldenummer: 97928215.9
(22) Anmeldetag: 17.06.1997
(51) Int. Cl.: C08F 8/50, C08J 11/28

(54) **ABBAU VON POLYMEREN DURCH NOR-HALS-VERBINDUNGEN**
DECOMPOSING POLYMERS USING NOR-HALS COMPOUNDS
DECOMPOSITION DE POLYMERES PAR DES COMPOSES NOR-HALS

(30) Priorität: 26.06.1996 CH 159896
(43) Veröffentlichungstag der Anmeldung: 21.04.1999
(73) Patentinhaber: Ciba Specialty Chemicals Holding Inc., 4057 Basel (CH)
(72) Erfinder: PFAENDNER, Rudolf, D-64668 Rimbach (DE); HERBST, Heinz, D-64646 Heppenheim (DE); HOFFMANN, Kurt, D-79585 Weitenau-Steinen (DE); SELTZER, Raymond, New City, NY 10956 (US); GANDE, Matthew, Edward, Danbury, CT 06811 (US)
(86) Internationale Anmeldenummer: EP9703133
(87) Internationale Veröffentlichungsnummer: WO9749737

(56) Entgegenhaltungen:
- EP-A- 0 389 424
- EP-A- 0 389 429
- DE-A- 4 224 990
- GB-A- 605 588
- GB-A- 931 417
- GB-A- 2 258 869
- US-A- 4 282 076
- US-A- 5 270 369
- US-A- 5 342 862
- US-A- 5 356 978
- PATENT ABSTRACTS OF JAPAN vol. 013, no. 315 (C-619), 18.Juli 1989 & JP 01 101337 A (MITSUBISHI CABLE IND LTD), 19.April 1989,

## Beschreibung

Die Erfindung betrifft ein Verfahren zur Molekulargewichtserniedrigung von Polymeren, z.B. Alt- und Gebrauchtkunststoffen, bei dem mindestens eine der weiter unten beschriebenen sogenannten "NOR-HALS"-Verbindungen zugesetzt wird und auf Temperaturen ab 280°C erhitzt wird.

Bei der Kunststoffentsorgung gewinnt das chemische Recycling, d.h der Abbau von Polymeren zu Oligomeren und niedermolekularen Produkten, im Vergleich zu den herkömmlichen thermomechanischen Umformungsverfahren an Bedeutung.

Das chemische Recycling kann auf verschiedene Weise erfolgen, z.B. durch Hydrierung, Visbreaking, Vergasung oder Pyrolyse (U. Hofmann, M. Gebauer, Kunststoffe **83**, 259 (1993); D.E.Vesper, U.Guhr Kunststoffe **83**, 905 (1993), H. Wanjek, U. Stabel, Kunststoffe **84**, 109 (1994); G. Menges, J. Bandrup, Kunststoffe **84**, 114 (1994); P.Mapleston, Mod. Plast. Int. **1993**, 32), aber auch durch einen Extrusionsprozeß. Dabei werden besonders Oligomere erzeugt [W. Hasberg, D. Vesper, M. Gebauer, Kunststoffe **84**, 103 (1994), W. Micheli, V. Lackner, Vortrag Int. Conf. on Advances in the Stabilization and Degradation of Polymers, CH-Luzern, 1994,177]. Es wurde auch die Verwendung von Katalysatoren vorgeschlagen (DE 4 224 990).

Zur Anpassung der Molekulargewichtsverteilung bei Kunststoffen wie Polypropylen werden während der Herstellung von Compounds vorwiegend Peroxide eingesetzt, die einen Abbau zu langer Ketten bewirken. Diese Verbindungen zerfallen bereits bei vergleichsweise geringen Temperaturen und sind daher für den gezielten Abbau von Polymeren bei höheren Temperaturen (d.h. oberhalb üblicher Verarbeitungstemperaturen) nur bedingt geeignet. Der Einsatz dieser Verbindungen in höheren Konzentrationen birgt ferner ein Sicherheitsrisiko, das entsprechende Schutzmaßnahmen erfordert.

Es kommt daher darauf an, den Abbau beschleunigende Zusatzstoffe bereitzustellen, deren Wirkung erst bei hohen Temperaturen einsetzt. Für diese Zwecke wurden nun in der Klasse der weiter unten beschriebenen "NOR-HALS"-Verbindungen geeignete Zusatzstoffe gefunden.

Die Erfindung betrifft somit ein Verfahren zur Molekulargewichtserniedrigung bei Polymeren bei Temperaturen ab 280°C, besonders ab 280 bis 400°C, bei dem NOR-HALS Verbindungen enthaltend mindestens eine Gruppe 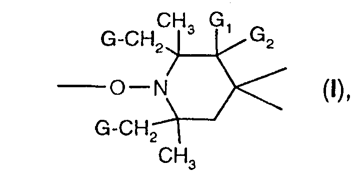 worin G Wasserstoff oder Methyl ist und G₁ und G₂ Wasserstoff, Methyl oder gemeinsam =O bedeuten, als Abbaukatalysatoren zugesetzt werden. Zweckmäßigerweise wird mit einem Extrusionsprozess gearbeitet.

Es versteht sich, daß die Polymere eine ausreichende Zeitspanne der erhöhten Temperatur ausgesetzt werden müssen, damit der gewünschte Abbau eintritt. Diese Zeitspanne ist für gewöhnlich länger als die Zeit, während der bei der Verarbeitung der Polymere erhöhte Temperaturen angewandt werden. Die Abbauzeiten können je nach Temperatur, Menge des abzubauenden Materials und Art des ggf. verwandten Extruders stark variieren. Gewöhnlich liegen sie bei ca. 2 bis 120 Minuten, besonders bei 5 bis 90 Minuten. Wie allgemein bekannt, werden sogenannte sterisch gehinderte Amine (**H**indered **A**mine **L**ight **S**tabilizers, HALS) den Polymeren als Lichtschutzmittel häufig bereits bei der Verarbeitung zugesetzt.

Die beschriebenen NOR-HALS Verbindungen eignen sich aber auch zur Molekulargewichtsbegrenzung bzw. Steuerung der Molekulargewichtsverteilung von Polymeren, insbesondere Polypropylen, während der Compoundierung, wobei sie, wie anfangs für Peroxide beschrieben, einen Abbau der Ketten bewirken.

Bei dem erfindungsgemäßen Verfahren sind die NOR-HALS-Verbindungen zweckmäßig zu 0.01 bis 10,0 beispielsweise zu 0.05 bis 5,0 vorzugsweise zu 0.05 bis 3,0, insbesondere jedoch zu 0.1 bis 2,0 Gew.-% enthalten. Es kann sich dabei um eine oder mehrere dieser Verbindungen handeln. Die Gewichtsprozentangaben beziehen sich auf die gesamte Menge dieser Verbindungen. Berechnungsgrundlage ist dabei das Gesamtgewicht des Polymeren ohne die NOR-HALS-Verbindungen .

Bei den NOR-HALS Verbindungen gemäss dem Verfahren handelt es sich um Derivate von Polyalkylpiperidinen, die mindestens eine Gruppe der Formel 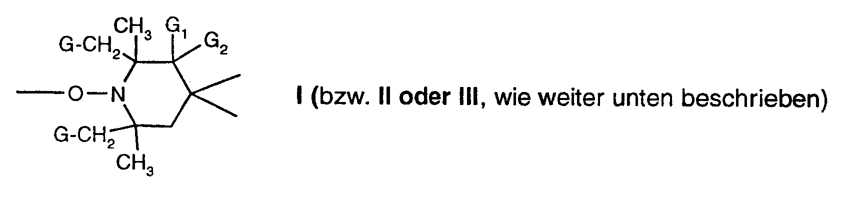 enthalten, worin G Wasserstoff oder Methyl ist und G₁ und G₂ Wasserstoff, Methyl oder gemeinsam =O bedeuten; vorzugsweise sind die Polyalkylpiperidingruppen der Formel **I** oder **II** in 4-Stellung mit einem oder zwei polaren Substituenten oder einen polaren Spiro-Ringsystem substituiert.

Beispiele für solche Verbindungen können gefunden werden in den US-Patenten Nr. 4 590 231, 5 300 647, 4 831 134, 5 204 473, 5 004 770, 5 096 950, 5 021 478, 5 118 736, 5 021 480, 5 015 683, 5 021 481, 5 019 613, 5 021 486, 5 021 483, 5 145 893, 5 286 865, 5 359 069, 4 983 737, 5 047 489, 5 077 340, 5 021 577, 5 189 086, 5 015 682, 5 015 678, 5 051 511, 5 140 081, 5 204 422, 5 026 750, 5 185 448, 5 180 829, 5 262 538, 5 371 125, 5 216 156, 5 300 544.

Bevorzugt ist innerhalb des Verfahrens die Verwendung von Verbindungen, die eine Gruppe der Formel 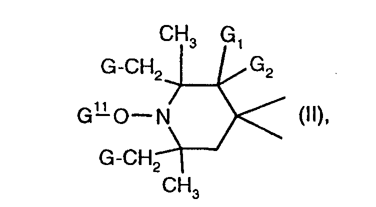 enthalten, worin G Wasserstoff ist, G₁ und G₂ wie oben definiert sind und G¹¹ Wasserstoff, C₁-C₁₈-Alkyl, C₂-C₁₈-Alkenyl, C₃-C₁₈-Alkinyl, C₅-C₁₂-Cycloalkyl, C₆-C₁₀-Bicycloalkyl, C₅-C₈-Cycloalkenyl, Phenyl, Naphthyl, C₇-C₁₂-Phenylalkyl, Phenyl oder Phenylalkyl substituiert durch Alkyl oder Phenyl mit 7 bis 14 Kohlenstoffatomen, oder eine Gruppe der Formel - CO - D' ist, worin D' die Bedeutung C₁-C₁₈-Alkyl, C₁-C₁₈-Alkoxy, Phenyl, oder Phenyl substituiert durch Hydroxy, C₁-C₈-Alkyl, C₁-C₈-Alkoxy, Amino oder Amino mono- oder disubstituiert durch C₁-C₈-Alkyl oder Phenyl hat.

G¹¹ ist insbesondere C₁-C₁₈-Alkyl, C₃-C₈-Alkenyl, C₃-C₈-Alkinyl, C₅-C₈-Cycloalkyl, C₇-C₉-Phenylalkyl, C₂-C₁₈Alkanoyl, C₃-C₆-Alkenoyl, z. B. C₁-C₁₈-Alkyl, C₅-C₈-Cycloalkyl oder C₇-C₉-Phenylalkyl.

Besonders bevorzugt verwendet man NOR-HALS Verbindungen enthaltend die Gruppe

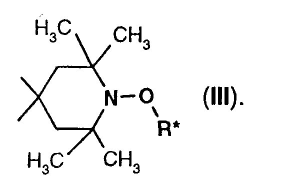

R* bedeutet dabei C₁-C₂₀-Alkyl, durch OH substituiertes C₁-C₂₀-Alkyl, gegebenenfalls durch C₁-C₄-Alkyl substituiertes C₅-C₁₂-Cycloalkyl, C₇-C₉-Phenylalkyl oder durch O oder S unterbrochenes C₂-C₂₀Alkyl, bevorzugt C₁-C₁₂-Alkyl, Benzyl oder C₅-C₈-Cycloalkyl insbesondere C₆-C₁₀-Alkyl oder Cyclohexyl.

Die Verwendung der Klassen sogenannter sterisch gehinderter Aminderivate, die nachfolgend unter (a) bis (h) beschrieben werden, und die mindestens eine Gruppe der Formel **I**, wie oben angegeben, tragen, ist von besonderem Interesse:

(a) Verbindungen der Formel IV 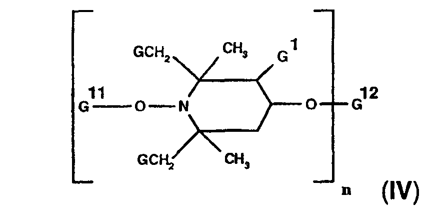 worin
n eine Zahl von 1 bis 4 ist, G und G¹ sind jeweils unabhängig voneinander Wasserstoff oder Methyl,G¹¹ wie oben definiert ist und
G¹², wenn n = 1 ist, Wasserstoff, C₁-C₁₈-Alkyl, das durch ein oder mehr als ein Sauerstoffatom unterbrochen sein kann, 2-Cyanethyl, Benzyl, Glycidyl, einen einwertigen Rest einer aliphatischen, cycloaliphatischen, araliphatischen, ungesättigten oder aromatischen Carbonsäure, Carbarminsäure oder phosphorhaltigen Säure, oder einen einwertigen Silylrest, vorzugsweise den Acylrest einer aliphatischen Carbonsäure mit 2 bis 18 C -Atomen, einer cycloaliphatischen Carbonsäure mit 7 bis 15 C-Atomen, einer a, β-ungesättigten Carbonsäure mit 3 bis 5 C-Atomen oder einer aromatischen Carbonsäure mit 7 bis 15 C-Atomen, wobei die Carbonsäure in dem aliphatischen, cycloaliphatischen oder aromatischen Teil substituiert sein durch 1 bis 3 Gruppen -COOZ¹² substituiert sein kann, worin Z¹² Wasserstoff ist, C₁-C₂₀-Alkyl, C₃-C₁₂-Alkenyl, C₅-C₇-Cycloalkyl, Phenyl oder Benzyl;
wenn n = 2 ist, C₂-C₁₂-Alkylen, C₄-C₁₂-Alkenylen, Xylylen, einen zweiwertigen Säurerest einer aliphatischen, cycloaliphatischen, araliphatischen oder aromatischen Dicarbonsäure, Dicarbaminsäure oder phosphorhaltigen Säure, oder einen zweiwertigen Silylrest, vorzugsweise den Acylrest einer aliphatischen Dicarbonsäure mit 2 bis 36 C-Atomen, einer cycloaliphatischen oder aromatischen Dicarbonsäure mit 8 bis 14 C-Atomen oder einer aliphatischen, cycloaliphatischen oder aromatischen Dicarbaminsäure mit 8 bis 14 C-Atomen, und die Dicarbonsäure in dem aliphatischen, cycloaliphatischen oder aromatischen Teil durch 1 oder 2 Gruppen -COOZ¹² substituiert sein kann;
wenn n = 3 ist, einen dreiwertigen Säurerest einer aliphatischen, cycloaliphatischen oder aromatischen Tricarbonsäure, wobei der Rest in dem aliphatischen, cycloaliphatischen oder aromatischen Teil durch -COOZ¹² substituiert sein kann, oder einen dreiwertigen Säurerest einer aromatischen Tricarbaminsäure oder einer phosphorhaltigen Säure, oder einen dreiwertiger Silylrest; oder,
wenn n = 4 ist, einen vierwertigen Säurerest einer aliphatischen, cycloaliphatischen oder aromatischen Tetracarbonsäure bedeutet.
   Die angegebenen Säurereste umfassen in jedem Falle Reste der Formel (-CO)ₙR, worin die Bedeutung von n wie oben angegeben ist und die Bedeutung von R den gegebenen Definitionen entspricht.
   C₁-C₁₂-Alkyl-Substituenten sind z.B. Methyl, Ethyl, n-Propyl, Isopropyl, n-Butyl, sek-Butyl, tert-Butyl, n-Hexyl, n-Octyl, 2-Ethylhexyl, n-Nonyl, n-Decyl, n-Undecyl oder n-Dodecyl.
   G¹¹ oder G¹² definiert als C₁-C₁₈-Alkyl können z.B. die oben angegebenen Gruppen sein und zusätzlich z. B. n-Tridecyl, n-Tetradecyl, n-Hexadecyl oder n-Octadecyl bedeuten.
   G¹¹ definiert als C₃-C₈-Alkenyl kann zum Beispiel 1-Propenyl, Allyl, Methallyl, 2-Butenyl, 2-Pentenyl, 2-Hexenyl, 2-Octenyl oder 4-tert-Butyl-2-butenyl sein.
   G¹¹ definiert als C₃-C₈-Alkinyl ist vorzugsweise Propargyl. G¹¹ definiert als C₇-C₁₂-Phenylalkyl ist vorzugsweise 2-Phenethyl oder Benzyl.
   G¹¹ definiert als C₂-C₁₈-Alkanoyl ist z.B. Propionyl, Butyryl, Octanoyl und bevorzugt Acetyl. Als C₃-C₆-Alkenoyl ist es vorzugsweise Acryloyl oder Methacryloyl.
   G¹², definiert als einwertiger Acylrest einer Carbonsäure, ist z.B. der Acylrest der Essigsäure, Hexansäure, Stearinsäure, Acrylsäure, Methacrylsäure, Benzoesäure oder β-(3,5-Di-tert-butyl-4-hydroxyphenyl)propionsäure; bevorzugt ist es der Acylrest der Stearinsäure, Acrylsäure oder Methacrylsäure.
   G¹², definiert als einwertiger Silylrest, ist z.B. ein Rest der Formel -(CⱼH₂ⱼ)-Si(Z')₂Z", worin j eine ganze Zahl von 2 bis 5 ist, und Z' und Z" sind jeweils unabhängig voneinander C₁-C₄-Alkyl oder C₁-C₄-Alkoxy.
   G¹², definiert als zweiwertiger Säurerest einer Dicarbonsäure, ist z.B. der Säurerest der Malonsäure, Bernsteinsäure, Glutarsäure, Adipinsäure, Subarinsäure, Sebacinsäure, Maleinsäure, Itaconsäure, Phthalsäure, Dibutylmalonsäure, Dibenzylmalonsäure, Butyl-(3,5-di-tert-butyl-4-hydroxybenzyl)malonsäure oder Bicycloheptendicarbonsäure.
   G¹², definiert als dreiwertiger Rest einer Tricarbonsäure, ist z.B. der Säurerest der Trimellitsäure, Citronensäure oder Nitrilotriessigsäure.
   G¹², definiert als vierwertiger Rest einer Tetracarbonsäure, ist z.B. der vierwertige Säurerest der Butan-1,2,3,4-tetracarbonsäure oder von Pyromellitsäure.
   G¹², definiert als zweiwertiger Rest einer Dicarbarminsäure, ist z.B. der Hexamethylendicarbaminsäurerest oder der 2,4-Toluylendicarbaminsäurerest.

   Bevorzugte Verbindungen sind solche der Formel IV, worin n 1 oder 2, G und G¹ Wasserstoff, G¹¹ C₆-C₁₀-Alkyl oder Cyclohexyl und G¹² der Acylrest einer aliphatischen Monocarbonsäure mit 12 bis 18 C-Atomen oder der Diacylrest einer aliphatischen Dicarbonsäure mit 4 bis 12 C-Atomen ist. Wichtige Beispiele für Alkylpiperidinverbindungen dieser Klasse sind:
   1) 1 -Octyloxy-4-hydroxy-2,2,6,6-tetramethylpiperidin
   2) 1-Cyclohexyloxy-4-hydroxy-2,2,6,6-tetramethylpiperidin
   3) 1-Cyclohexyloxy-4-stearoyloxy-2,2,6,6-tetramethylpiperidin
   4) Bis(1-cyclohexyloxy-2,2,6,6-tetramethylpiperidin-4-yl)succinat
   5) Bis(1-cyclohexyloxy-2,2,6,6-tetramethylpiperidin-4-yl)adipat
   6) Bis(1-octyloxy-2,2,6,6-tetramethylpiperidin-4-yl)sebacat.

(b) Verbindungen der Formel 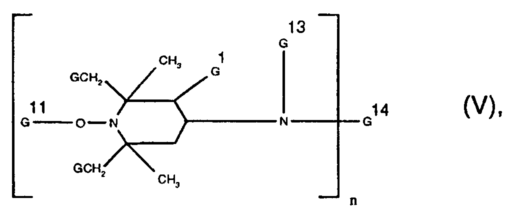 worin n die Bedeutung 1 oder 2 und G, G¹ und G¹¹ die in (a) gegebenen Bedeutungen haben, G¹³ ist Wasserstoff, C₁-C₁₂-Alkyl, C₂-C₅-Hydroxyalkyl, C₅-C₇-Cycloalkyl, C₇-C₈-Aralkyl, C₂-C₁₈Alkanoyl, C₃-C₅-Alkenoyl, Benzoyl oder eine Gruppe der Formel 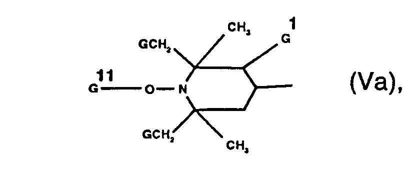 worin
G¹⁴, wenn n = 1 ist, Wasserstoff, C₁-C₁₈-Alkyl, C₃-C₈-Alkenyl, C₅-C₇-Cycloalkyl; C₁-C₄-Alkyl, das substituiert ist durch eine Hydroxy-, Cyan-, Alkoxycarbonyl- oder Carbamid-Gruppe; Glycidyl; eine Gruppe der Formel -CH₂-CH(OH)-Z oder der Formel -CONH-Z, worin Z Wasserstoff, Methyl oder Phenyl ist;
wenn n = 2 ist, C₂-C₁₂-Alkylen, C₆-C₁₂-Arylen, Xylylen, eine -CH₂CH(OH)-CH₂-Gruppe oder eine Gruppe -CH₂-CH(OH)-CH₂-O-D-O- bedeutet, worin D die Bedeutung C₂-C₁₀-Alkylen, C₆-C₁₅-Arylen, C₆-C₁₂-Cycloalkylen hat; oder, vorausgesetzt daß G¹³ nicht Alkanoyl, Alkenoyl oder Benzoyl ist, kann G¹⁴ auch 1-Oxo-C₂-C₁₂-alkylen, einen zweiwertigen Rest einer aliphatischen, cycloaliphatischen oder aromatischen Dicarbonsäure oder Dicarbaminsäure oder die Gruppe -CO- bedeuten; oder wenn n = 1 ist, können G¹³ und G¹⁴ zusammengenommen den zweiwertigen Rest einer aliphatischen, cycloaliphatischen oder aromatischen 1,2-Dicarbonsäure oder 1,3-Dicarbonsäure bedeuten.
   Die C₁-C₁₂-Alkyl-Substituenten oder C₁-C₁₈-Alkyl-Substituenten haben die unter (a) angegebene Bedeutung.
   Die C₅-C₇-Cycloalkyl-Substituenten sind vorzugsweise Cyclohexyl.
   G¹³, definiert als C₇-C₈-Aralkyl ist vorzugsweise 2-Phenethyl oder Benzyl. G¹³, definiert als C₂-C₅-Hydroxyalkyl, ist vorzugsweise 2-Hydroxyethyl oder 2- oder 3-Hydroxypropyl.
   G¹³, definiert als C₂-C₁₈Alkanoyl, ist z.B. Propionyl, Butyryl, Octanoyl, Dodecanoyl, Hexadecanoyl, Octadecanoyl, vorzugsweise Acetyl.Als C₃-C₅-Alkenoyl ist es vorzugsweise Acryloyl.
   G¹⁴, definiert als C₂-C₈-Alkenyl, ist z.B. Allyl, Meth-allyl, 2-Butenyl, 2-Pentenyl, 2-Hexenyl oder 2-Octenyl.
   G¹⁴, definiert als C₁-C₄-Alkyl, das substituiert ist durch eine Hydroxy-, Cyan-, Alkoxycarbonyl- oder Carbamid-Gruppe, kann z.B. sein: 2-Hydoxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)ethyl.
   C₂-C₁₂-Alkylen-Substituenten sind z.B. Ethylen, Propylen, 2,2-Dimethylpropylen, Tetramethylen, Hexamethylen, Octamethylen, Decamethylen oder Dodecamethylen.
   C₆-C₁₅-Arylen-Substituenten sind z. B. o-, m- oder p-Phenylen, 1,4-Naphthylen oder 4,4'-Diphenylen.
   C₆-C₁₂-Cycloalkylen ist vorzugsweise Cyclohexylen.
      Bevorzugte Verbindungen sind solche der Formel V, worin n = 1 oder 2 ist, G Wasserstoff, G¹¹ C₆-C₁₀-Alkyl oder Cyclohexyl, G¹³ Wasserstoff, C₁-C₁₂-Alkyl oder eine Gruppe der Formel Va und, wenn n = 1 ist, G¹⁴ Wasserstoff oder C₁-C₁₂-Alkyl, und wenn n = 2 ist, C₂-C₈-Alkylen oder 1-Oxo-C₂-C₈-Alkylen bedeuten.

(c) Verbindungen der Formel 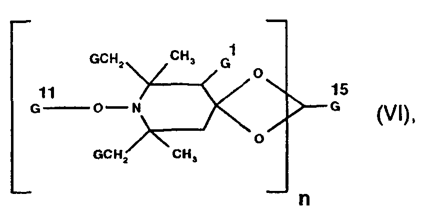 worin n 1 oder 2 ist, und G, G¹ und G¹¹ die unter (a) angegebenen Bedeutungen haben, und G¹⁵, wenn n = 1 ist, C₂-C₈-Alkylen, C₂-C₈-Hydroxyalkylen oder C₄-C₂₂-Acyloxyalkylen oder wenn n = 2 ist, die Gruppe (-CH₂)₂C(CH₂-)₂ bedeutet.
G¹⁵, definiert als C₂-C₈-Alkylen oder C₂-C₈-Hydroxyalkylen, ist z.B. Ethylen, 1-Methylethylen, Propylen, 2-Ethylpropylen oder 2-Ethyl-2-Hydroxymethylpropylen.
G¹⁵, definiert als C₄-C₂₂-Acyloxyalkylen, ist z.B. 2-Ethyl-2-acetoxymethylpropylen.

(d) Verbindungen der Formeln VIIA, VIIB und VIIC, vorzugsweise Verbindungen der Formel VIIC: 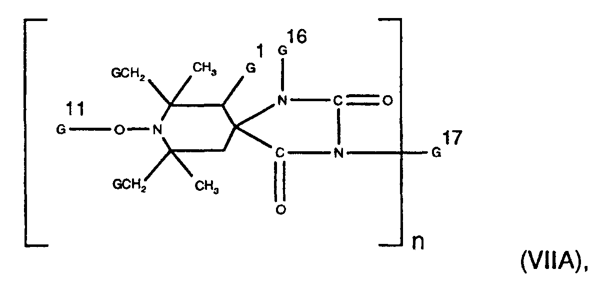 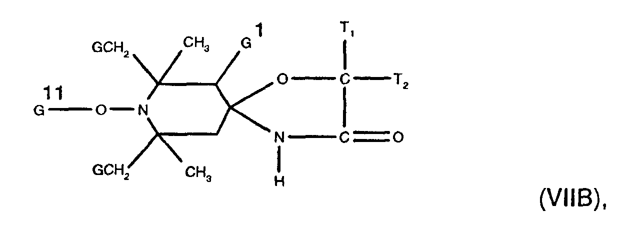 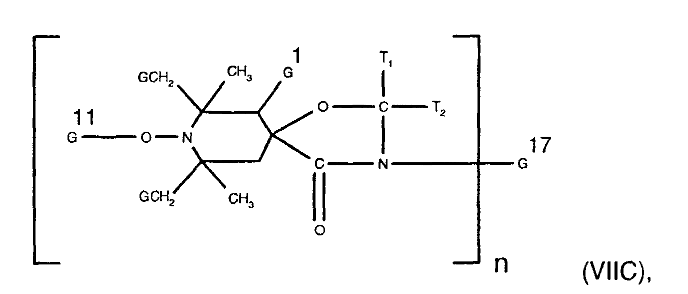 worin n 1 oder 2 ist, und G, G¹ und G¹¹ die in (a) angegebenen Bedeutungen haben,
G¹⁶ ist Wasserstoff, C₁-C₁₂-Alkyl, Allyl, Benzyl, Glycidyl oder C₂-C₆-Alkoxyalkyl, und G¹⁷, wenn n = 1 ist, Wasserstoff, C₁-C₁₂-Alkyl, C₃-C₅-Alkenyl, C₇-C₉-Aralkyl, C₅-C₇-Cycloalkyl, C₂-C₄-Hydroxyalkyl, C₂-C₆-Alkoxyalkyl, C₆-C₁₀-Aryl, Glycidyl oder eine Gruppe der Formel -(CH₂)ₚ-COO-Q oder der Formel -(CH₂)ₚ-O-CO-Q, worin p 1 oder 2 ist, und Q C₁-C₄-Alkyl oder Phenyl; wenn n = 2 ist, C₂-C₁₂-Alkylen, C₄-C₁₂-Alkenylen, C₆-C₁₂-Arylen, eine Gruppe -CH₂-CH(OH)-CH₂-O-D-O-CH₂-CH(OH)-CH₂-, worin D die Bedeutung C₂-C₁₀-Alkylen, C₆-C₁₅-Arylen, C₆-C₁₂-Cycloalkylen bedeutet, oder eine Gruppe -CH₂CH(OZ')CH₂-(OCH₂-CH(OZ')CH₂)₂- , worin Z' Wasserstoff, C₁-C₁₈-Alkyl, Allyl, Benzyl, C₂-₁₂-Alkanoyl oder Benzoyl bedeutet.
T¹ und T² sind jeweils unabhängig voneinander Wasserstoff, C₁-C₁₈-Alkyl oder C₆-C₁₀-Aryl oder C₇-C₉-Aralkyl, von denen jedes durch Halogen oder C₁-C₄-Alkyl substituiert sein kann, oder T¹ und T² bilden zusammen mit dem verbindenden Kohlenstoffatom einen C₅-C₁₄-Cycloalkanring.

Die Substituenten C₁-C₁₂-Alkyl sind z.B. Methyl, Ethyl, n-Propyl, Isopropyl, n-Butyl, sek-Butyl, tert-Butyl, n-Hexyl, n-Octyl, 2-Ethylhexyl, n-Nonyl, n-Decyl, n-Undecyl oder n-Dodecyl.

Substituenten, die als C₁-C₁₈-Alkyl definiert sind, können z.B. die oben angegebenen Gruppen oder z. B. n-Tridecyl, n-Tetradecyl, n-Hexadecyl oder n-Octadecyl sein.

Die Substituenten C₂-C₆-Alkoxyalkyl sind z.B. Methoxymethyl, Ethoxymethyl, Propoxymethyl, tert-Butoxymethyl, Ethoxyethyl, Ethoxypropyl, n-Butoxyethyl, tert-Butoxyethyl, Isopropoxyethyl oder Propoxypropyl.
G¹⁷, definiert als C₃-C₅-Alkenyl ist z.B. 1-Propenyl, Allyl, Methallyl, 2-Butenyl oder 2-Pentenyl.
G¹⁷, T¹ und T², definiert als C₇-C₉-Aralkyl, sind vorzugsweise 2-Phenethyl oder Benzyl. Wenn T¹ und T² zusammen mit dem Kohlenstoffatom einen Cycloalkanring bilden, dann kann dieser Ring z.B. ein Cyclopentan-, Cyclohexan-, Cyclooctan- oder Cyclododecan-Ring sein.
G¹⁷, definiert als C₂-C₄-Hydroxyalkyl, ist z.B. 2-Hydroxyethyl, 2- oder 3-Hydroxypropyl oder 2-, 3- oder 4 -Hydroxybutyl.
G¹⁷, T¹ und T², definiert als C₆-C₁₀-Aryl ist vorzugsweise Phenyl oder α- oder β-Naphthyl, von denen jedes durch Halogen oder C₁-C₄-Alkyl substituiert sein kann.
G¹⁷, definiert als C₂-C₁₂-Alkylen, ist z.B. Ethylen, Propylen, 2,2-Dimethylpropylen, Tetramethylen, Hexamethylen, Octamethylen, Decamethylen oder Dodecamethylen.
G¹⁷, definiert als C₄-C₁₂-Alkenylen ist vorzugsweise 2-Butenylen, 2-Pentenylen oder 3-Hexenylen.
G¹⁷, definiert als C₆-C₁₂-Arylen ist z.B. o-, m- oder p-Phenylen, 1,4-Naphthylen oder 4,4'-Diphenylen.
Z', definiert als C₂-₁₂-Alkanoyl ist z.B. Propionyl, Butyryl, Octanoyl, Dodecanoyl, ist jedoch vorzugsweise Acetyl.
D, definiert als C₂-C₁₀-Alkylen, C₆-C₁₅-Arylen oder C₆-C₁₂-Cycloalkylen ist wie unter (b) definiert.

(e) Verbindungen der Formel VIII, die wahlweise bevorzugt sind, 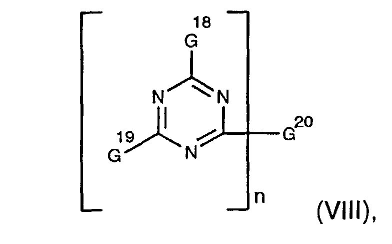 worin n = 1 oder 2 ist, und G¹⁸ ist eine der Gruppen der Formel 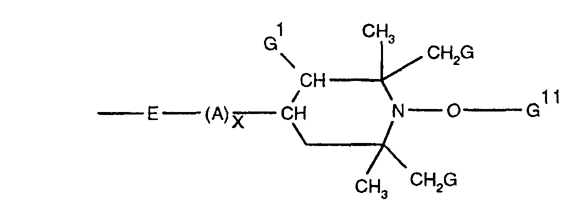 oder 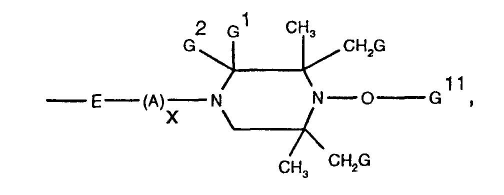 worin G und G¹¹ wie in (a) definiert sind, wobei G bevorzugt Wasserstoff ist, und G¹¹ bevorzugt C₁-C₁₀-Alkyl oder Cyclohexyl ist, und G¹ und G² Wasserstoff oder Methyl oder zusammengenommen der Substituent =O ist,
E ist -O- oder -NG¹³-, A ist C₂-C₆-Alkylen oder -(CH₂)₃-O-, und x ist entweder 0 oder 1,
G¹³ ist Wasserstoff, C₁-C₁₂-Alkyl, C₂-C₅-Hydroxyalkyl oder C₅-C₇-Cycloalkyl,
G⁹ ist identisch mit G¹⁸ oder ist eine der Gruppen -NG²¹G²², -OG²³, -NHCH₂OG²³ oder -N(CH₂OG²³)₂,
G²⁰, wenn n=1 ist, ist identisch mit G¹⁸ oder G¹⁹, und wenn n=2 ist, bedeutet eine Gruppe -E-B-E-, worin B C₂-C₈-Alkylen oder C₂-C₈-Alkylen ist, das unterbrochen ist durch 1 oder 2 Gruppen N(G²¹)-, G²¹ is C₁-C₁₂-Alkyl, Cyclohexyl, Benzyl oder C₁-C₄-Hydroxyalkyl oder eine Gruppe der Formel (Va),
G²² ist C₁-C₁₂-Alkyl, Cyclohexyl, Benzyl oder C₁-C₄-Hydroxyalkyl, und G²³ ist Wasserstoff, C₁C₁₂-Alkyl oder Phenyl, oder G²¹ und G²² sind zusammengenommen C₄₋₅-Alkylen oder C₄₋₅-Oxaalkylen, 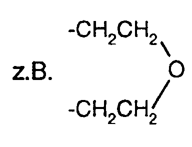 oder eine Gruppe der Formel: 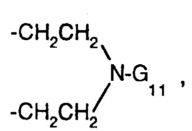 oder G²¹ ist eine Gruppe der Formel: 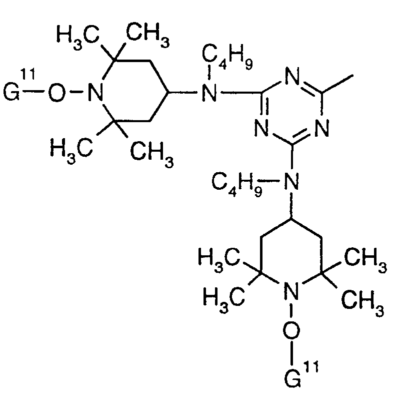
C₁-C₁₂-Alkyl-Substituenten sind z.B. Methyl, Ethyl, n-Propyl, n-Butyl, sek-Butyl, tert-Butyl, n-Hexyl, n-Octyl, 2-Ethylhexyl, n-Nonyl, n-Decyl, n-Undecyl oder n-Dodecyl.
C₁-C₄-Hydroxyalkyl-Substituenten sind z. B. 2-Hydroxyethyl, 2- oder 3-Hydroxypropyl oder 2-, 3- oder 4-Hydroxybutyl.
A, definiert als C₂-C₆-Alkylen, ist z.B. Ethylen, Propylen, 2,2-Dimethylpropylen, Tetramethylen oder Hexamethylen.
G²¹ und G²² zusammen definiert als C₄-C₅-Alkylen oder -Oxaalkylen, sind z.B. Tetramethylen, Pentamethylen oder 3-Oxapentamethylen.

Wichtige Beispiele für Polyalkylpiperidinverbindungen dieser Klasse sind Verbindungen der folgenden Formeln

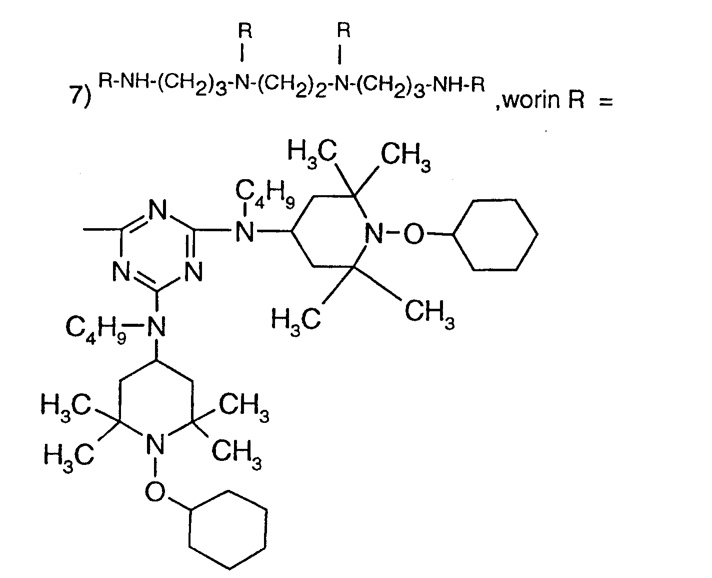

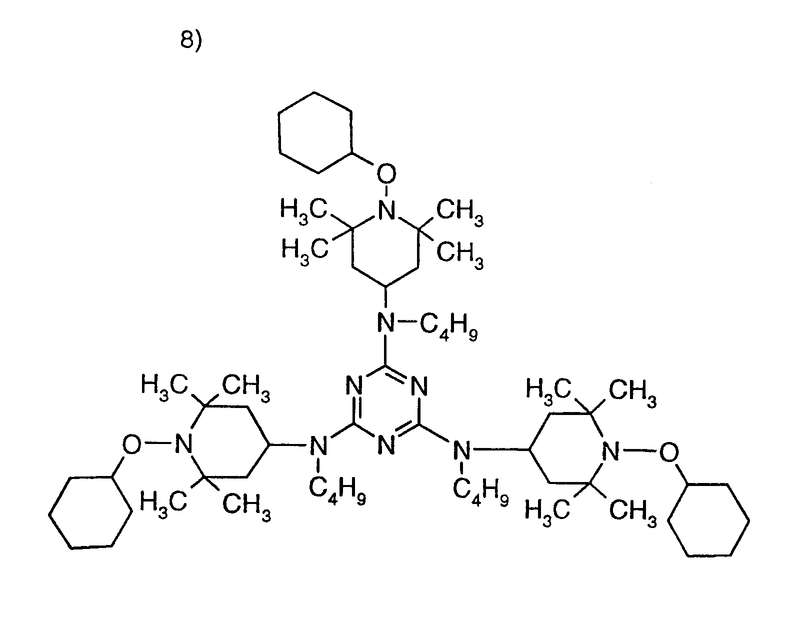

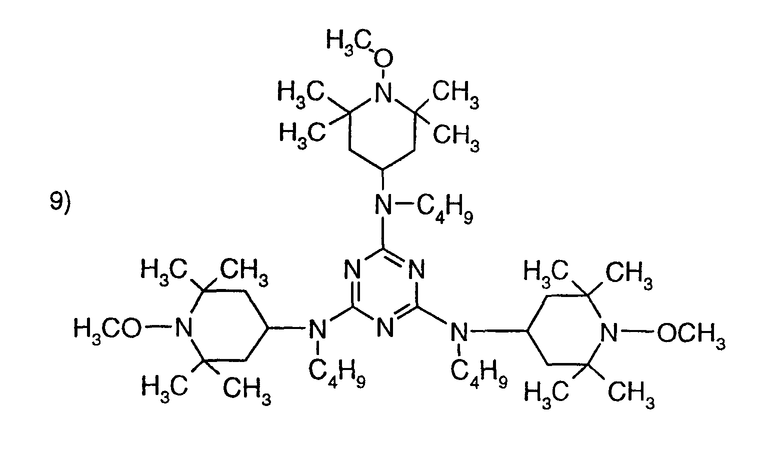

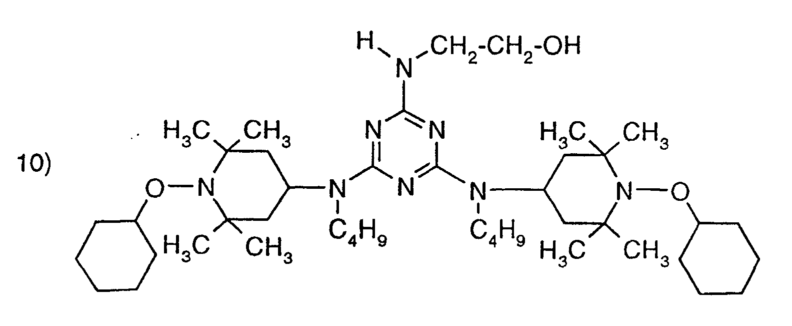

(f) Oligomere oder polymere Verbindungen, deren sich wiederholende Struktureinheit einen N-substituierten 2,2,6,6-Tetraalkylpiperidinrest der Formel I, insbesondere der Formel III, enthält, vorzugsweise Polyester, Polyether, Polyamide, Polyamine, Polyurethane, Polyharnstoffe, Polyaminotriazine, Poly(meth)acrylate, Poly(meth)acrylamide und deren Copolymere enthalten derartige Reste.

Reste, die als Alkyl ohne weitere Spezifizierung bezeichnet sind, sind vorzugsweise n-Alkyl; zum Beispiel ist Octyl (der Rest C₈H₁₇) vorzugsweise n-Octyl (der Rest [CH₂]₇-CH₃).

Bevorzugt als NOR-HALS Verbindungen im erfindungsgemäßen Verfahren sind sterisch gehinderte Aminderivate der Formeln IV oder VIII (Gruppen (a) und (e)) sowie oligomere oder polymere Verbindungen der Gruppe (f).

Üblicherweise enthält das erfindungsgemäß abzubauende synthetische organische Polymere von 0,01 bis 10 Gewichts-% des sterisch gehinderten Aminderivates. Vorteilhafte Bereiche liegen von 0,05 bis 5 %, speziell von 0,1 bis 2 Gewichts-% des sterisch gehinderten Aminderivats.

Im erfindungsgemäßen Verfahren können einzelne oder Gemische von NOR-HALS-Verbindungen eingesetzt werden. Im Falle eines Gemisches von Verbindungen beziehen sich die angegebenen Mengen in jedem Falle auf die Gesamtmenge an verwendeten sterisch gehinderten Aminderivaten.

Besonders bevorzugt werden NOR-HALS Verbindungen der folgenden Strukturen verwandt: 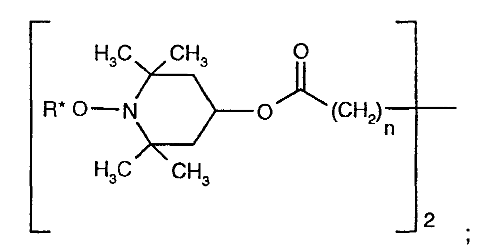 n = 1 bis 8; 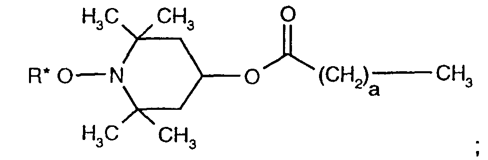 a = 0 bis 24; 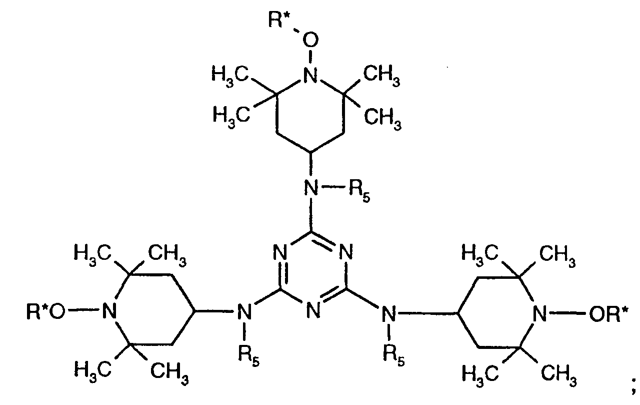 R₅ = H, C₁-C₁₀ Alkyl oder C₅-C₈-Cycloalkyl;
worin R* C₁-C₂₀-Alkyl oder gegebenenfalls durch C₁-C₄-Alkyl substituiertes C₅-C₁₂-Cycloalkyl darstellt,
die Verbindungen 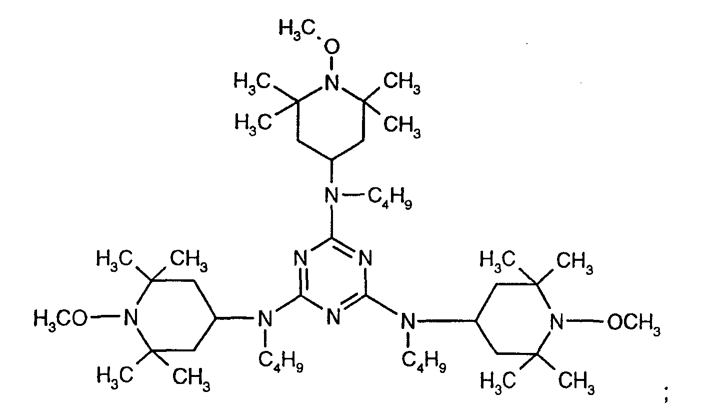 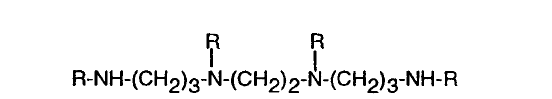 mit R = 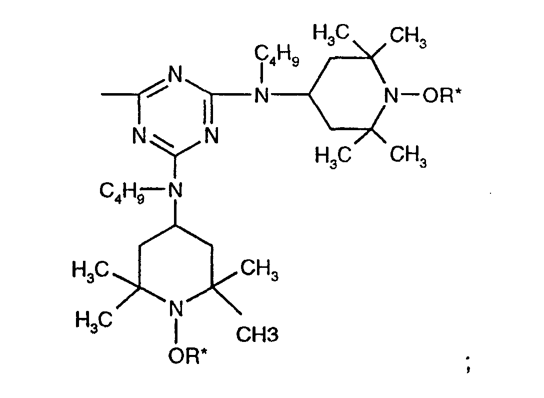 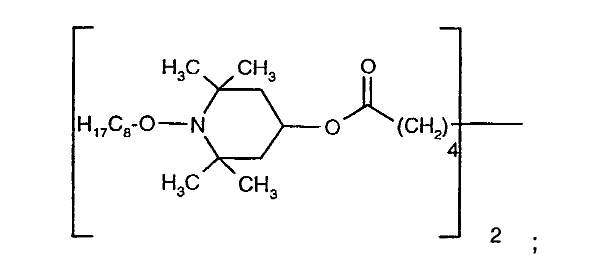 R-NH-CH₂CH₂CH₂-NR-CH₂CH₂-NR-CH₂CH₂-NH-R mit R = 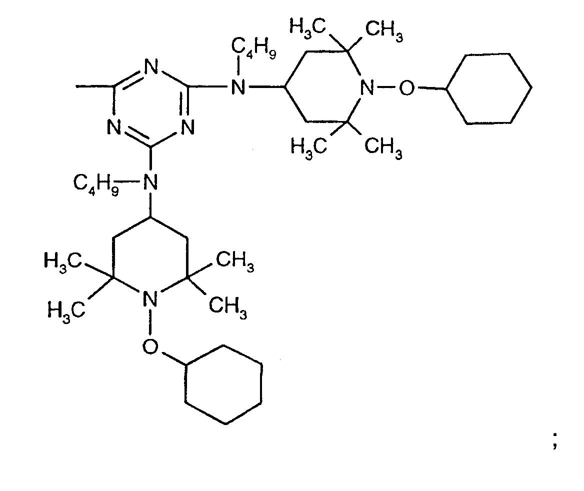 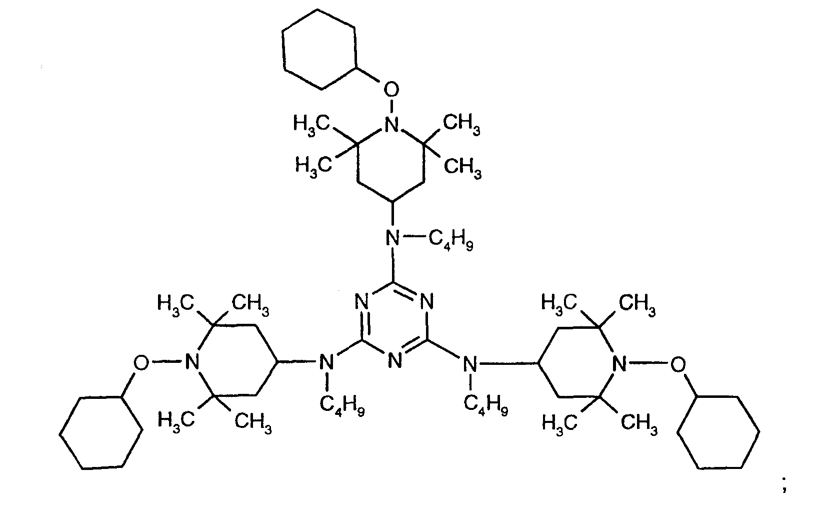 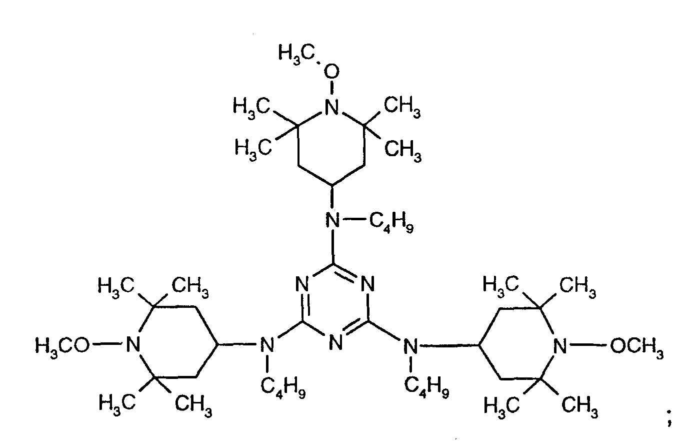 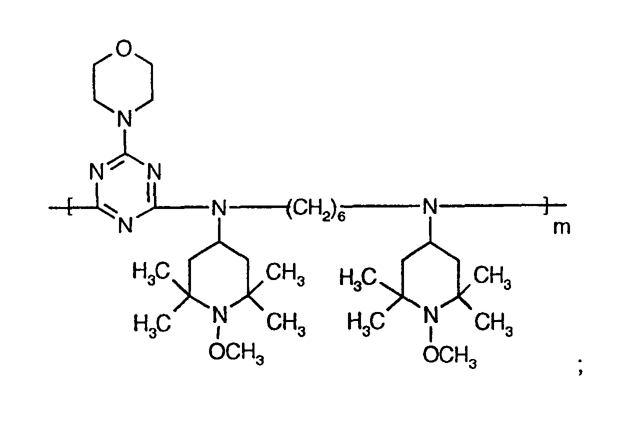 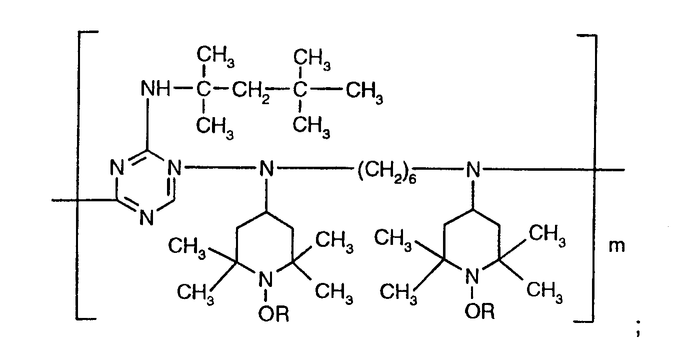 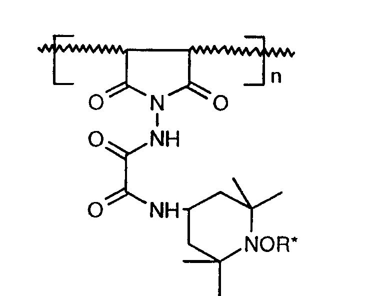 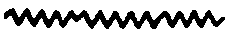 = Polymer-Kette, typischerweise Ethylen- oder Styrol-Copolymer mit Maleinsäureanhydrid ;

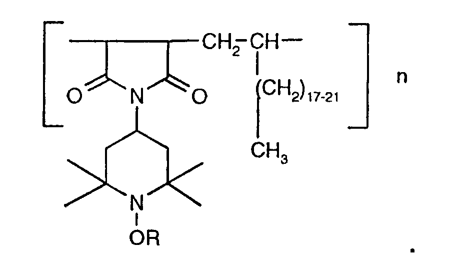

Die genannten Amine sind bekannte Verbindungen; viele davon sind kommerziell erhältlich.

### Beispiele für katalytisch abzubauende Materialien sind:

1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten, Norbornen oder Dicyclopentadien; ferner Polyethylen (das gegebenenfalls vernetzt oder teilvernetzt sein kann), z.B. Polyethylen hoher Dichte (HDPE), Polyethylen niederer Dichte (LDPE), lineares Polyethylen niederer Dichte (LLDPE), verzweigtes Polyethylen niederer Dichte (VLDPE).
   Besonders eignet sich das erfindungsgemäße Verfahren für Polyolefine, d.h. Polymere von Monoolefinen, wie sie beispielhaft im vorstehenden Absatz erwähnt sind, insbesondere Polyethylen und Polypropylen. Diese können nach verschiedenen Verfahren hergestellt werden, insbesondere nach den folgenden Methoden:
   a) radikalisch (gewöhnlich bei hohem Druck und hoher Temperatur).
   b) mittels Katalysator, wobei der Katalysator gewöhnlich ein oder mehrere Metalle der Gruppe IVb, Vb, Vlb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder p- oder s-koordiniert sein können. Diese Metallkomplexe können frei oder auf Träger fixiert sein, wie beispielsweise auf aktiviertem Magnesiumchlorid, Titan(lll)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwandt werden, wie beispielsweise Metallalkyle, Metallhydride, Metallalkylhalogenide, Metallalkyloxide oder Metallalkyloxane, wobei die Metalle Elemente der Gruppen la, lla und/oder llla sind. Die Aktivatoren können beispielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
2. Mischungen der unter 1) genannten Polymeren, z.B. Mischungen von Polypropylen mit Polyisobutylen, Polypropylen mit Polyethylen (z.B. PP/HDPE und/oder LDPE, PP/EPDM) und Mischungen verschiedener Polyethylentypen (z.B. LDPE/HDPE, ggf. mit LLDPE).
3. Copolymere von Mono- und Diolefinen untereinander oder mit anderen Vinylmonomeren, z.B. Ethylen-Propylen-Copolymere, lineares Polyethylen niederer Dichte (LLDPE) und Mischungen desselben mit Polyethylen niederer Dichte (LDPE), Propylen- Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.
4. Kohlenwasserstoffharze (z.B. C₅-C₉) inklusive hydrierte Modifikationen davon (z.B. Klebrigmacherharze) und Mischungen von Polyalkylenen und Stärke.
5. Polystyrol, Poly-(p-methylstyrol), Poly-(alpha-methylstyrol).
6. Copolymere von Styrol oder alpha-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol (SBS), Styrol-Isopren-Styrol, Styrol-Ethylen/Butylen-Styrol oder Styrol-Ethylen/Propylen-Styrol.
7. Pfropfcopolymere von Styrol oder alpha-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind.
8. Halogenhaltige Polymere, wie z.B. Polychloropren, Chlorkautschuk, chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
9. Polymere, die sich von alpha,beta-ungesättigten Säuren und deren Derivaten ableiten, wie Polyacrylate und Polymethacrylate, mit Butylacrylat schlagzäh modifizierte Polymethyl methacrylate, Polyacrylamide und Polyacrylnitrile.
10. Copolymere der unter 9) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
12. Homo- und Copolymere von cyclischen Ethern, wie Polyalkylenglykole, Polyethylenoxyd, Polypropylenoxyd oder deren Copolymere mit Bisglycidylethern.
13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
14. Polyphenylenoxide und -sulfide und deren Mischungen mit Styrolpolymeren oder Polyamiden.
15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylen-isophthalamid. Block-Copolymere der vorstehend genannten Polyamide mit Polyolefinen, Olefin-Copolymeren, lonomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RlM-Polyamidsysteme").
17. Polyharnstoffe, Polyimide, Polyamid-imide und Polybenzimidazole.
18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Polyethylennaphthylat, Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.
19. Polycarbonate und Polyestercarbonate.
20. Polysulfone, Polyethersulfone und Polyetherketone.
21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
22. Trocknende und nicht-trocknende Alkydharze.
23. Ungesättigte Polyesterharze, die sich von Copolyestern gsättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
24. Vernetzbare Acrylharze, die sich von substituierten Acrylsäureestern ableiten, wie z.B. von Epoxyacrylaten, Urethan-acrylaten oder Polyester-acrylaten.
25. Alkydharze, Polyesterharze und Acrylatharze, die mit Melaminharzen, Harnstoffharzen, Polyisocyanaten oder Epoxidharzen vernetzt sind.
26. Vernetzte Epoxidharze, die sich von Polyepoxiden ableiten, z.B. von Bisglycidylethern oder von cycloaliphatischen Diepoxiden.
27. Natürliche Polymere, wie Cellulose, Naturkautschuk, Gelatine, sowie deren polymerhomolog chemisch abgewandelte Derivate, wie Celluloseacetate,-propionate und -butyrate, bzw. die Celluloseether, wie Methylcellulose; sowie Kolophoniumharze und Derivate.
28. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PA/LDPE.
29. Wäßrige Emulsionen natürlicher oder synthetischer Kautschuke, wie z.B. Naturkautschuk-Latex oder Latices von carboxylierten Styrol-Butadien-Copolymeren.
30. Mischungen der unter 1-29 genannten Kunststoffe.

Als Elastomere kommen z.B. in Betracht:
1. Polydiene, wie beispielsweise Polybutadien, Polyisopren oder Polychloropren; Blockpolymere, wie beispielsweise Styrol/Butadien/Styrol, Styrol/Isopren/Styrol oder Acrylnitril/Butadien-Copolymere.
2. Copolymere von Mono- und Diolefinen miteinander oder mit anderen Vinylmonomeren, wie z.B. Ethylen-Alkylacrylat-Copolymere, Ethylen-Alkylmethacrylat-Copolymere, Ethylen-Vinylacetat-Copolymere sowie Terpolymere von Ethylen mit Propylen und einem Dien, wie Hexadien, Dicyclopentadien oder Ethylidennorbornen.
3. Halogenhaltige Polymere, wie z.B. Polychloropren, Chlorkautschuk, chloriertes oder chlorsulfoniertes Polyethylen, Epichlorhydrin-Homo- und - Copolymere, Chlortrifluoroäthylen-Copolymere, Polymere aus halogenhaltigen Vinylverbindungen, wie z.B. Polyvinylidenchlorid, Polyvinylidenfluorid; sowie deren Copolymere, wie Vinylchlorid-Vinylidenchlorid, Vinylchlorid-Vinylacetat oder Vinylidenchlorid-Vinylacetat.
4. Polyurethane, die sich von Polyethern, Polyestern und Polybutadien mit endständigen Hydroxylgruppen einerseits und aliphatischen oder aromatischen Polyisocyanaten andererseits ableiten sowie deren Vorprodukte.
5. Naturkautschuk.
6. Mischungen (Polyblends) der vorgenannten Polymeren.
7. Wäßrige Emulsionen natürlicher oder synthetischer Kautschuke, wie z.B. Naturkautschuk-Latex oder Latices von carboxylierten Styrol-Butadien-Copolymeren.

Die Einarbeitung in die Polymeren kann beispielsweise durch Einmischen der NOR-HALS-Verbindungen oder Mischungen und gegebenenfalls weiterer Additive nach den in der Technik üblichen Methoden erfolgen.

Die NOR-HALS-Verbindungen oder Mischungen können auch in Form eines Masterbatches, der diese Verbindungen beispielsweise in einer Konzentration von 2,5 bis 25 Gew.-% enthält, den abzubauenden Kunststoffen zugesetzt werden.

Ein weiterer Gegenstand der Erfindung ist somit die Verwendung von NOR-HALS-Verbindungen zur Molekulargewichtserniedrigung und z.B. zum Abbau von Polymeren.

Besonders relevant ist der Abbau von Altkunststoffen. Hier sind die NOR-HALS-Verbindungen vor allem für Polypropylen und Polyethylen geeignet, ganz besonders für Polyolefinmischungen, wie sie z.B. bei Sammlungen und Trennprozessen anfallen.

Geeignet ist auch der gezielte Abbau von Polymeren oder deren Mischungen, z.B. von Polyethylen zu Wachs.

Als weitere Abbaukatalysatoren und Destabilisatoren eignen sich Peroxide, saure Erden, Zeolithe, Hydrocalcite oder Metallsalze, z.B. von Fe, Zn oder Cu.

Die folgenden Beispiele illustrieren die Erfindung. Die hierin und in der Beschreibung sowie den Ansprüchen verwendeten Mengenangaben beziehen sich, sofern nicht anders angegeben, auf das Gewicht.

### Beispiel 1: Abbau von Polypropylen/Schmelzindexmessungen

Polypropylenpulver wird mit 0,5% des in Tabelle **I** angegebenen Zusatzstoffes gemischt und 30 Minuten bei der angegebenen Temperatur aufgeschmolzen. Das Produkt wird zur Kühlung durch ein Wasserbad gezogen und anschließend granuliert. Der Schmelzindex MFR [g/10 min] wird gemessen (bei 190°C mit 1,2 kg). Große Zunahme des Schmelzindex bedeutet starken Kettenabbau, also gute Destabilisierung. Die Resultate sind in Tabelle I zusammengefaßt.

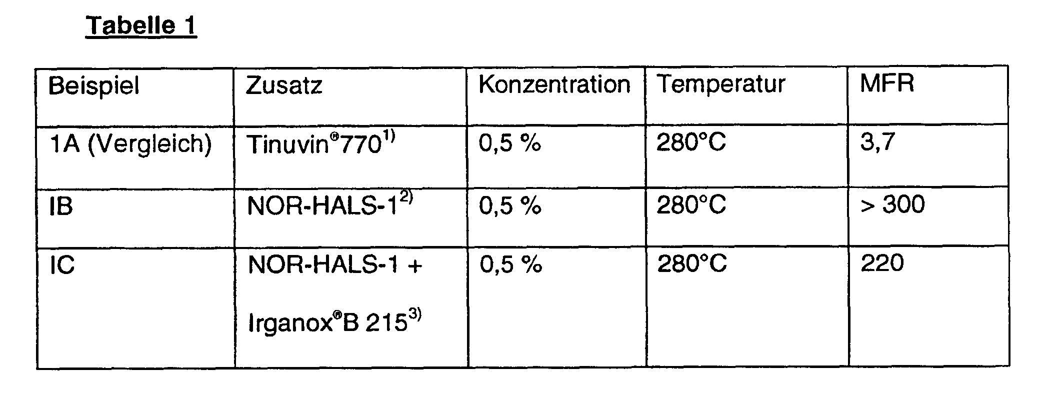

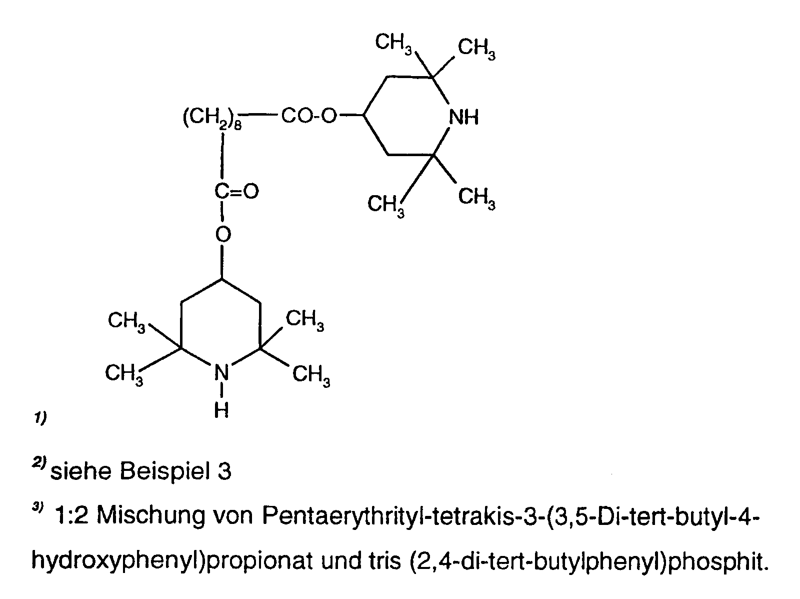

***Beispiel 2***: Ein HDPE Altmaterial wird mit den angegebenen Zusätzen in der Schmelze versetzt und der Zersetzungsbeginn mittels thermogravimetrischer Analyse (TGA) bestimmt. Die niedrigste Zersetzungstemperatur Tᵢ weist die NOR-HALS enthaltende Mischung 2C auf. Die Mischung 2B enthält einen herkömmlichen Abbaukatalysator.

**Tabelle 2:**

| HDPE-Altmaterial, TGA-Messung | | | |
|---|---|---|---|
| Beispiel | Zusatz | Konzentration | Temperatur |
| 2A (Vergleich) | ohne | 0 % | 491°C |
| 2B | Zeolith ZSM 5 | 5 % | 421 |
| 2C | NOR-HALS-1 | 5 % | 371 |
| ^{*1)*} NOR-HALS-1: siehe Beispiel 3 | | | |

### Beispiel 3:

Ein PP/PE-Copolymer-Altmaterial von gebrauchten Batteriekästen wird einem gezielten Abbau unterworfen, indem es auf einem Doppelschneckenextruder Rheocord® (Fa. Haake) mit den angegebenen zusätzen bei 280° Cund 70 Upm extrudiert wird. Anschliessend wird gemäss ISO 1133 der MFR-Wert bei 230° C und 2,16 kg bestimmt. Im Vergleich zu einem ohne Zusatz extrudierten Material wird ein hoher MFR-Wert mit den erfindungsgemässen Zusätzen erhalten, der einen entsprechenden Abbau beweist. Der Abbau bzw. MFR-Wert kann durch eine Variation des Zustands der Zusatzmenge eingestellt werden.

**Tabelle 3**

| | | Zusatz | MFR 230/2,16 |
|---|---|---|---|
| 3A | PP/PE-Copo-Altmaterial (Vergleich) | ohne | 6,8 |
| 3B | PP/PE-Copo-Altmaterial | 0,5 % NOR-HALS 1 | 32 |
| 3C | PP/PE-Copo-Altmaterial | 1,0 % NOR-HALS 1 | 51 |
| 3D | PP/PE-Copo-Altmaterial | 1,0 % NOR-HALS 2 | 51 |
| 3E | PP/PE-Copo-Altmaterial | 1,0 % NOR-HALS 2 | 51 |

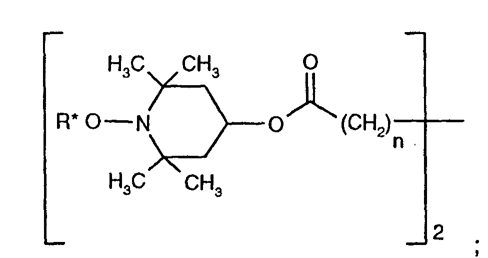

n;

n = 1, R* = Cyclohexyl: NOR-HALS 1 (CA 260327)

n = 1, R*= Methyl: NOR-HALS 2 (CA 270212)

n = 4, R*= Cyclohexyl: NOR-HALS 3 (CA 260094).

## Patentansprüche

1. Verfahren zur Molekulargewichtserniedrigung bei Polymeren, dadurch gekennzeichnet, daß man diesen mindestens eine NOR-HALS Verbindung enthaltend mindestens eine Gruppe der Formel: 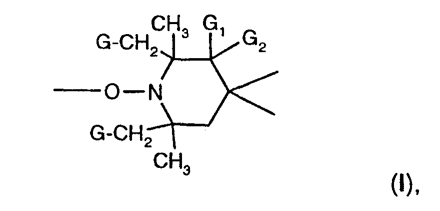 worin G Wasserstoff oder Methyl ist und G₁ und G₂ Wasserstoff, Methyl oder gemeinsam =O bedeuten, zusetzt und auf Temperaturen ab 280°C erhitzt.

2. Verfahren gemäß Anspruch 1, bei dem mindestens eine Verbindung enthaltend mindestens eine Gruppe der Formel 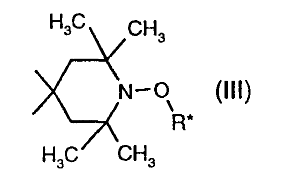 zugesetzt wird, worin R* C₁-C₂₀-Alkyl, durch OH substituiertes C₁-C₂₀-Alkyl, gegebenenfalls durch C₁-C₄-Alkyl substituiertes C₅-C₁₂-Cycloalkyl oder durch O oder S unterbrochenes C₂-C₂₀-Alkyl darstellt.

3. Verfahren gemäß Anspruch 1, dadurch gekennzeichnet, daß man es innerhalb eines Extrusionsprozesses durchführt.

4. Verfahren gemäß Anspruch 1, dadurch gekennzeichnet, daß man es bei Temperaturen von 280°C bis 400°C durchführt.

5. Verfahren gemäß Anspruch **1**, wobei das Polymer eine Polymermischung ist.

6. Verfahren gemäß Anspruch **1**, wobei das Polymer ein Altkunststoff ist.

7. Verfahren gemäß Anspruch **1**, wobei das Polymer ein Polyolefin ist.

8. Verfahren gemäß Anspruch **7**, wobei das Polymer Polypropylen oder - ethylen ist.

9. Verfahren zur Herstellung von Polymeren mit gesteuerter Molekulargewichtsverteilung, dadurch gekennzeichnet daß mindestens eine der in Anspruch 1 beschriebenen Verbindungen dem Polymer zugesetzt wird und auf Temperaturen ab 280°C erhitzt wird.

10. Verwendung der in Anspruch 1 beschriebenen NOR-HALS Verbindungen zur Molekulargewichtserniedrigung von Polymeren.

## Claims

1. Method of reducing molecular weight in polymers, characterized in that at least one NOR-HALS compound comprising at least one group of the formula: 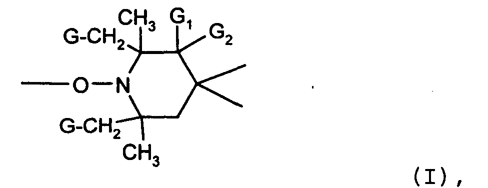 in which G is hydrogen or methyl and G₁ and G₂ are hydrogen, methyl or together are =O is added to these polymers and heating is carried out at temperatures of 280°C or more.

2. Method according to claim 1, in which at least one compound comprising at least one group of the formula 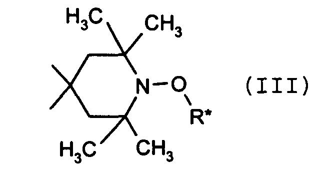 is added in which R* is C₁-C₂₀alkyl, OH-substituted C₁-C₂₀alkyl, optionally C₁-C₄alkyl-substituted C₅-C₁₂cycloalkyl or O- or S-interrupted C₂-C₂₀alkyl.

3. Method according to claim 1, characterized in that it is carried out within an extrusion process.

4. Method according to claim 1, characterized in that it is carried out at temperatures from 280°C to 400°C.

5. Method according to claim 1, where the polymer is a polymer mixture.

6. Method according to claim 1, where the polymer is a waste plastic.

7. Method according to claim 1, where the polymer is a polyolefin.

8. Method according to claim 7, where the polymer is polypropylene or polyethylene.

9. Method of preparing polymers with controlled molecular weight distribution, characterized in that at least one of the compounds described in claim 1 is added to the polymer and heating is carried out at temperatures of 280°C or more.

10. Use of the NOR-HALS compounds described in claim 1 for reducing the molecular weight of polymers.

## Revendications

1. Procédé pour la diminution de la masse moléculaire de polymères, caractérisé en ce que, l'on ajoute à ceux-ci au moins un composé NOR-HALS contenant au moins un groupe de formule : 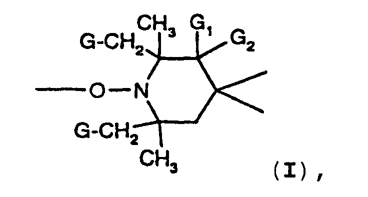 dans laquelle G représente un atome d'hydrogène ou un groupe méthyle et G₁ et G₂ représentent un atome d'hydrogène, un groupe méthyle ou ensemble =O, et l'on chauffe à des températures supérieures à 280°C.

2. Procédé selon la revendication 1, dans lequel on ajoute au moins un composé contenant au moins un groupe de formule 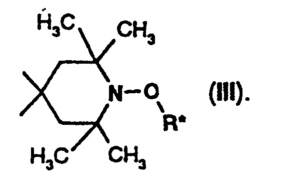 dans laquelle R* représente un groupe alkyle en C₁ à C₂₀, alkyle en C₁ à C₂₀ substitué par OH, cycloalkyle en C₅ à C₁₂ éventuellement substitué par un groupe alkyle en C₁ à C₄ ou alkyle en C₂ à C₂₀ interrompu par O ou S.

3. Procédé selon la revendication 1, caractérisé en ce qu'on le réalise à l'intérieur d'un procédé d'extrusion.

4. Procédé selon la revendication 1, caractérisé en ce qu'on le réalise à des températures allant de 280°C à 400°C.

5. Procédé selon la revendication 1, dans lequel le polymère est un mélange de polymères.

6. Procédé selon la revendication 1, dans lequel le polymère est une matière plastique usagée.

7. Procédé selon la revendication 1, dans lequel le polymère est une polyoléfine.

8. Procédé selon la revendication 7, dans lequel le polymère est le polypropylène ou le polyéthylène.

9. Procédé pour la préparation de polymères ayant une répartition régulée de masses moléculaires, caractérisé en ce qu'on ajoute au polymère au moins un des composés décrits à la revendication 1 et en ce qu'on chauffe à des températures supérieures à 280°C.

10. Utilisation des composés NOR-HALS décrits à la revendication 1 pour la diminution de la masse moléculaire de polymères.
